# EUROPEAN PATENT APPLICATION

(11) **EP 4 541 968 A1**
(43) Date of publication of application: **23.04.2025**
(21) Application number: 22946928.3
(22) Date of filing: 26.09.2022
(51) Int. Cl.: E02B 3/04

(54) **MOLDING FRAME DEVICE FOR CIVIL ENGINEERING WORK BAG**

(30) Priority: 17.06.2022 JP 2022098001
(71) Applicant: Maeda Kosen Co., Ltd., Sakai-shi, Fukui 919-0422 (JP)
(72) Inventor: KAWABATA, Satoshi, Sakai-shi, Fukui 919-0422 (JP); TSUBOTA, Kenki, Sakai-shi, Fukui 919-0422 (JP); INOUE, Kazunori, Sakai-shi, Fukui 919-0422 (JP); SATOU, Arihumi, Sakai-shi, Fukui 919-0422 (JP)
(74) Representative: Mewburn Ellis LLP
(86) International application number: PCT/JP2022/035654
(87) International publication number: WO 2023/243113

(57) **Abstract**

[Problem] The present invention relates to a molding frame device for a civil engineering work bag that is used when filling the civil engineering work bag with a filling material in the manufacture of a large-sized foot protection unit that can be used in foot protection work, revetment work, temporary foundation work, and the like.

[Solution] This molding frame device 1 for a civil engineering work bag is characterized by comprising a molding frame body 10 having an open upper opening, the molding frame body 10 having a tapered expanded-diameter section H2 the diameter of which increases upward, and a rising section H1 rising from the upper edge of the expanded-diameter section H2, the angle of the inner surface of the rising section H1 with respect to the axial direction of the molding frame body 10 being smaller than the angle of the inner surface of the expanded-diameter section H2 with respect to the axial direction of the molding frame body 10.

## Description

### BACKGROUND OF THE INVENTION

### FIELD OF THE INVENTION

The present invention relates to a frame device for civil-engineering work bags, in particular, to a frame device for civil-engineering work bags to be used for putting infilling material into a civil-engineering work bag (of said civil-engineering bags) in the manufacture of a large-scale foot protection unit capable of being used for foot protection work, shore protection work, temporary foundation work, and other civil engineering work.

### DESCRIPTION OF THE BACKGROUND ART

In various types of civil engineering work, such as foot protection work, shore protection work, and temporary foundation work, there have been widely used foot protection units each made by putting infilling material into a civil-engineering work bag.

Patent Document 1 discloses a civil-engineering work bag made entirely of mesh fabric including: a lifting rope having an endless structure to be attached circumferentially around a mesh portion in proximity to an opening (mouth) of a bag body of said civil-engineering work bag; and a mouth-narrowing rope for preventing the opening of the bag body from being opened.

To manufacture a foot protection unit using the civil-engineering work bag, a frame device dedicated thereto has been used. More specifically, such a foot protection unit was manufactured by: arranging the civil-engineering work bag inside a cylindrical frame device so as to set the mouth of the bag body of said civil-engineering work bag circumferentially around an upper frame member of the frame device; putting infilling material into the civil-engineering work bag; closing the mouth of the bag body with the mouth-narrowing rope; drawing the lifting rope through the mesh portion of the bag body; hanging collectively a plurality of drawn portions of the lifting rope on a hook such as a crane's hook; and finally, lifting the lifting rope by *e.g.* a crane so as to remove the foot protection unit from the frame device.

Patent Document 2 discloses a frame device formed to have an annular upper frame member and an annular lower frame member coupled with each other via a plurality of longitudinally oriented frames in a tapered (inversely truncated conical) outer shape so as to facilitate removal therefrom of the foot protection unit.

As weather disasters have become larger and ever severer, there have recently been introduced large-scale foot protection units capable of withstanding high waves and torrents.

To manufacture such a large-scale foot protection unit, it has been necessary to enlarge a size of the civil-engineering work bag as well as a capacity of the frame device so as to accommodate, in said civil-engineering work bag, a large amount of infilling material.

For example, one contemplated option (a) for enlarging a size of the frame device is an increase of the upper frame member in diameter by expanding a taper angle without changing any size of the lower frame member. Another contemplated option (b) is an increase of the upper frame member in diameter by enhancing a height of the frame device without changing any taper angle. In such an option (b), the upper frame member is expanded in such a manner as that in option (a). Still another contemplated option (c) is an increase of the lower frame member in diameter by making a taper angle steeper without changing any size of the upper frame member.

### (Prior Art Documents)

### (Patent Documents)

Patent Document 1: Japanese Patent Application Laid-Open Publication No. 2000-1828
Patent Document 2: Japanese Patent No. 7062113

### (Problems to be Solved)

Conventional techniques have the following problems to be solved:
[1] Expanding the upper frame member of the frame device (options (a) and (b)) has invoked the need to open the mouth of the civil-engineering work bag widely upon setting of said civil-engineering work bag inside the frame device. This has reduced work efficiency and caused the workload to increase on workers. Further, a horizontally projected area of the frame device has increased, which has resulted in an increase of footprint, and a weight of the frame device has increased, which has resulted in difficulty in handling.
[2] Enhancing a height of the frame device (option (b)) has required workers to conduct a high-altitude work above the frame device during removal of the foot protection unit therefrom. This has reduced work efficiency, and caused risk to increase. Further, in the event of infilling material spilling over a top edge of the frame device, such an enhanced height has the correspondingly enhanced amount of fall energy, which might have caused greater damage.
[3] Expanding a taper angle (inclining) of the frame device (option (a)) has enhanced a probability that infilling material would be spilt over a top edge of the upper frame member.
[4] Reducing a taper angle (making steeper) of the frame device (option (c)) has caused binding between an outer circumferential surface of the foot protection unit and an inner surface of the frame device upon lifting of the foot protection unit, which has made it difficult to remove the foot protection unit from the frame device. There has also been a risk of the frame device being lifted together with the foot protection unit and eventually falling.

### SUMMARY OF THE INVENTION

An object of the present invention is to provide a frame device for civil-engineering work bags capable of solving the above-described technical problems.

### (Means for Solving Problems)

A first aspect of the present invention is a frame device for civil-engineering work bags to be used for putting infilling material into a civil-engineering work bag made of net fabric, the frame device comprising: a frame body with an open top including an enlarged portion tapered so as to increase in diameter upward and an elevated portion elevated upward from an upper edge of the enlarged portion, wherein an angle of an inner surface of the elevated portion with respect to an axial direction of the frame body is smaller than an angle of an inner surface of the enlarged portion with respect to an axial direction of the frame body.

A second aspect of the present invention is the frame device for civil-engineering work bags in the above-described first aspect, wherein the elevated portion may be elevated vertically from the upper edge of the enlarged portion.

A third aspect of the present invention is the frame device for civil-engineering work bags in the above-described second aspect, wherein an inner diameter of the elevated portion may be larger than a maximum diameter of the civil-engineering work bag in a lifted state having the infilling material put therein.

A fourth aspect of the present invention is the frame device for civil-engineering work bags in any one of the above-described first to third aspects, wherein the frame device may further comprise a plurality of overhang handles arranged in a protruding manner on an outer surface of the frame body.

A fifth aspect of the present invention is the frame device for civil-engineering work bags in the above-described fourth aspect, wherein the plurality of overhang handles may be arranged in a protruding manner on an outer surface of the enlarged portion.

A sixth aspect of the present invention is the frame device for civil-engineering work bags in any one of the above-described first to third aspects, wherein the frame body may be formed to have an annular upper frame member and an annular lower frame member coupled with a plurality of longitudinally oriented frame members.

A seventh aspect of the present invention is the frame device for civil-engineering work bags in any one of the above-described first to third aspects, wherein the frame body may have an assembly consisting of a plurality of frames arranged divisionally in a circumferential direction.

### (Advantageous Effects achieved by the Invention)

According to the above-described aspects, the frame device for civil-engineering work bags of the present invention can achieve at least one of the effects described below.
[1] A volume of infilling material can be enhanced from conventional tapered frames without changing any size of the upper and lower frame members and any height of the frame. This enables the manufacture of large-scale foot protection units without causing any burden to increase on workers in setting of the bag body due to an increase in size of the upper frame member and without reducing any work efficiency due to an enhancement in height of the frame body.
[2] As a folded-back portion of the bag body is in contact with an outer surface of the elevated portion, the net fabric can be prevented from slipping so that the bag body can be set on the frame device by a small number of workers. Further, during putting of the infilling material into the bag body, the bag body is in frictional contact with an outer surface of the elevated portion, thereby to be prevented from being drawn in.
[3] The elevated portion prevents the infilling material from spilling over a top edge of the frame device during putting of the infilling material into the bag body.

### BRIEF DESCRIPTION OF THE DRAWINGS

FIG. 1 depicts a view showing explanatorily a frame device for civil-engineering work bags according to an embodiment of the present invention.
FIG. 2 depicts a view showing explanatorily a frame body.
FIG. 3A depicts an explanatory view of how to use the frame device in step (1).
FIG. 3B depicts an explanatory view of how to use the frame device in step (2).
FIG. 3C depicts an explanatory view of how to use the frame device in step (3).
FIG. 3D depicts an explanatory view of how to use the frame device in step (4).

### DESCRIPTIONS OF EMBODIMENTS OF THE INVENTION

Hereinafter, a frame device for civil-engineering work bags according to an embodiment of the present invention will be described in detail with reference to the drawings. It is to be noted, in the present invention, that the term "circumferential direction" refers to an orientation along a circumference of the frame device, and the term "axial direction" refers to a direction along a central axis of the frame device.

### [FIRST EMBODIMENT]

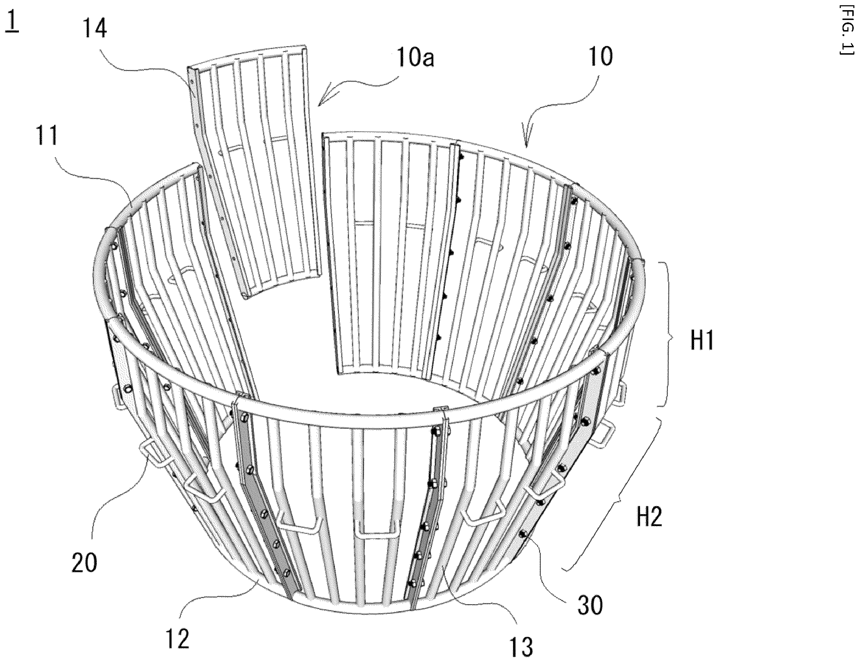

### [1] OVERALL STRUCTURE (FIG. 1)

A frame device 1 for civil-engineering work bags according to an embodiment of the present invention is a frame to be used for putting infilling material B into a civil-engineering work bag A, thereby to manufacture a large-scale foot protection unit C.

The frame device 1 includes a frame body 10.

The frame body 10 of the frame device 1 has a form obtained as a result of combining a wall-like elevated portion H1 and a tapered enlarged portion H2. This structure is characterized in one feature that an inner surface of the elevated portion H1 is inclined toward an inner cavity with respect to an inner surface of the enlarged portion H2.

In an embodiment of the present invention, a plurality of overhang handles 20 are arranged along an outer surface of the enlarged portion H2 in such a manner that each overhang handle 20 protrudes from the outer surface. This arrangement is not necessarily limitative, and the plurality of overhang handles 20 may be arranged on the elevated portion H1. Still alternatively, the plurality of overhang handles 20 may be arranged across two rows, one row of which is on the elevated portion H1 and the other row of which is on the enlarged portion H2, or the plurality of overhang handles 20 may be arranged across two sets of a plurality of rows, one set of which is on the elevated portion H1 and the other set of which is on the enlarged portion H2.

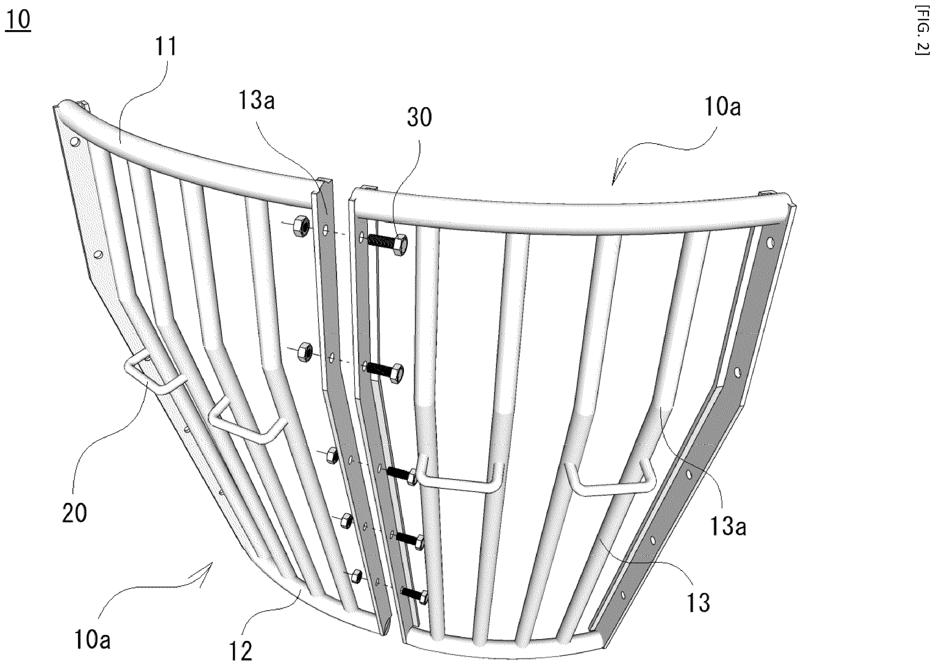

### [2] FRAME BODY (FIG. 2)

The frame body 10 is a tubular body defining a main body of the frame device 1.

The frame body 10 is formed as a result of combining bar or pipe members in longitudinal and lateral directions.

In an embodiment of the present invention, the frame body 10 has a frame-shaped structure formed as a result of coupling upper and lower frame members 11, 12 with a plurality of longitudinally oriented frame members 13 arranged side by side in a circumferential direction.

The upper and lower frame members 11, 12 are annular bar members, respectively. The upper frame member 11 is larger in diameter than the lower frame member 12.

Each longitudinally oriented frame member 13 is a single bar member so bent at a predetermined angle at a predetermined height as to have an elbow portion 13a formed therewith. The elbow portion 13a defines a boundary between the elevated portion H1 and the enlarged portion H2.

In an embodiment of the present invention, the frame body 10 has a divided structure consisting of a plurality of separate frames 10a. A structure of the frame body 10 is not necessarily limited to such a divided structure, and may be an integrated structure.

### SEPARATE FRAME (FIG. 2)

Separate frames 10a are components included in the frame body 10.

The separate frames 10a are an arbitrary number of circumferentially side-by-side sections formed as a result of dividing an outer shape of the frame body 10. In an embodiment of the present invention, the frame body 10 is divided into ten sections such that each section has a central angle of 36°.

Each separate frame 10a includes coupling portions 14 on both edges thereof. Each coupling portion 14 is a plate member perforated with bolt holes. Upon assembly of the frame body 10, the coupling portions 14 of their respective two separate frames 10a adjacent to each other are caused to abut against each other and then fastened with coupling means 30 inserted through their respective bolt holes.

Such a divided structure of the frame body 10 consisting of a plurality of separate frames 10a can reduce a footprint during storage and transportation. Further, each separate frame 10a itself is relatively lightweight, which makes the separate frames 10a easy to handle during transportation and installation.

### ELEVATED PORTION

The elevated portion H1 has the function of accommodating, in the civil-engineering work bag A, the infilling material B.

The elevated portion H1 extends upward from an upper edge of the enlarged portion H2 and is inclined toward an inner cavity of the frame body 10 with respect to the enlarged portion H2.

That is, an angle of an inner surface of the elevated portion H1 with respect to an axial direction of the frame body 10 is smaller than an angle of an inner surface of the enlarged portion H2 with respect to an axial direction of the frame body 10.

In an embodiment of the present invention, the elevated portion H1 is a straight wall upstanding vertically from an upper edge of the enlarged portion H2. This prevents an increase in size of the upper frame member 11 and also facilitates spreading of the mouth when setting the civil-engineering work bag A. The elevated portion H1 is not necessarily limited to a straight wall, and may be in a tapered shape having a smaller taper angle than that of the enlarged portion H2.

In an embodiment of the present invention, the elevated portion H1 is configured such that an inner diameter thereof is larger than a maximum diameter of the lifted foot protection unit C.

A design value of the maximum diameter of the foot protection unit C in a lifted state is determined by a bag size of the civil-engineering work bag A. As a result, the inner diameter of the elevated portion H1 can be predesigned in accordance with the specifications of the foot protection unit C to be used.

### ENLARGED PORTION

The enlarged portion H2 has the function of facilitating removal of the civil-engineering work bag A.

An outer shape of the enlarged portion H2 increases in diameter upward from the lower frame member 12, and the plurality of longitudinally oriented frame members 13 are continuous at their respective elbow portions 13a as boundaries between the enlarged portion H2 and the elevated portion H1.

While a taper angle of the enlarged portion H2 can be designed as appropriate, it is preferred that the taper angle be within a range of approximately 20° to 30° for practical purposes.

### [3] OVERHANG HANDLE

The overhang handles 20 are handles for handling the frame body 10.

The overhang handles 20 are arranged on an outer surface of the frame body 10 such that each overhang handle 20 protrudes from the outer surface.

In an embodiment of the present invention, the overhang handle 20 is a substantially bracket-shaped bar member welded across two longitudinally oriented frame members 13 adjacent to each other. The overhang handle 20 is not necessarily limited to be in such a shape, and may be in a substantially U-shape or the like.

The overhang handles 20 may be arranged on all of the separate frames 10a or may be arranged selectively on some of the separate frames 10a. For a plurality of overhang handles 20, it is preferred that such a plurality of overhang handles 20 be side by side arranged in space-apart at the same height.

### FUNCTIONS OF OVERHANG HANDLE

The overhang handles 20 have the function not only of handles for handling the separate frames 10a but also of positioners to prevent any draw-in of the civil-engineering work bag A arranged inside the frame body 10 and steppers for workers to step during any work above the frame body 10.

In a case where the frame body 10 is disassembled into the separate frames 10a and such disassembled separate frames 10a are placed on the ground, each of the separate frames 10a whose overhang handles 20 face downward can be prevented from shaking due to following an arc-shaped surface thereof.

### [4] FOOT PROTECTION UNIT

The foot protection unit C is manufactured by putting the infilling material B into the civil-engineering work bag A.

It is to be noted that, while the term "foot protection unit" is used for convenience of explanations, applying the foot protection unit C is not necessarily limited to foot protection work.

### CIVIL-ENGINEERING WORK BAG

The civil-engineering work bag A is a bag having the infilling material B put thereinto.

The civil-engineering work bag A includes a bag body A1 made of net fabric, a lifting rope A2, and a mouth-narrowing rope A3.

The bag body A1 is a closed-end bag made of net fabric having a mouth at a top thereof.

The bag body A1 has different external dimensions depending upon an amount of infilling material B (1 to 8 tons) accommodated therein.

The net fabric of the bag body 21 may be, e.g., super-thick raschel net fabric made as a result of double-knitting yarns of synthetic fiber such as polyester.

A mesh of the bag body A1 is so dimensioned as to prevent the infilling material B from passing therethrough, and a mesh size falls typically within a range of 25 to 50 mm.

The lifting rope A2 is an endless rope for lifting the foot protection unit C. The lifting rope A2 is attached to the bag body A1 such that the lifting rope A2 is inserted through a mesh in proximity to the mouth of the bag body A1.

The mouth-narrowing rope A3 is a rope for closing the mouth of the bag body A1. The mouth-narrowing rope A3 is attached to the bag body A1 such that the mouth-narrowing rope A3 is inserted through a mesh in proximity to the mouth of the bag body A1.

### INFILLING MATERIAL

The infilling material B is material to be put into the civil-engineering work bag A.

The infilling material B may be e.g.: natural aggregate such as cobble stones, broken stones, crushed stones; concrete debris; and the like.

For foot protection, infilling material B having a diameter of approximately 150 mm is used, and a size of infilling material B may be selected as appropriate depending upon the intended use.

### [5] HOW TO USE FRAME DEVICE

Through the use of the frame device 1 in an embodiment of the present invention, a foot protection unit C is manufactured by, *e.g.,* performing the following procedural steps.

It is to be noted that the frame device 1 is in a state having been brought to a construction site, having been assembled, and having been installed on the ground, while the opening of the elevated portion H1 facing upward.

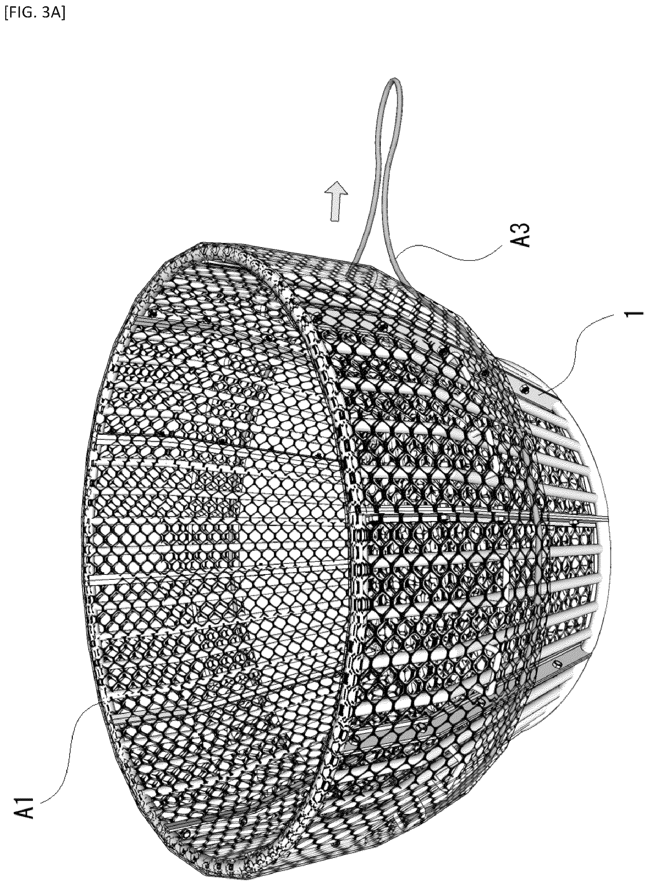

### SETTING OF CIVIL-ENGINEERING WORK BAG (FIG. 3A)

The civil-engineering work bag A is set inside the frame device 1. More specifically, e.g., the following procedural steps are performed.

The bag body A1 in a spread state is placed to follow inside the frame body 10.

An upper portion of the bag body A1 extending beyond the frame body 10 is folded back onto an outer peripheral surface of the frame body 10, and such a folded-back portion is pulled downward with respect to the overhang handles 20.

The mouth-narrowing rope A3 is drawn and tightened at a position lower than the overhang handles 20 to temporarily secure the mouth of the bag body A1 onto an outer surface of the frame body 10.

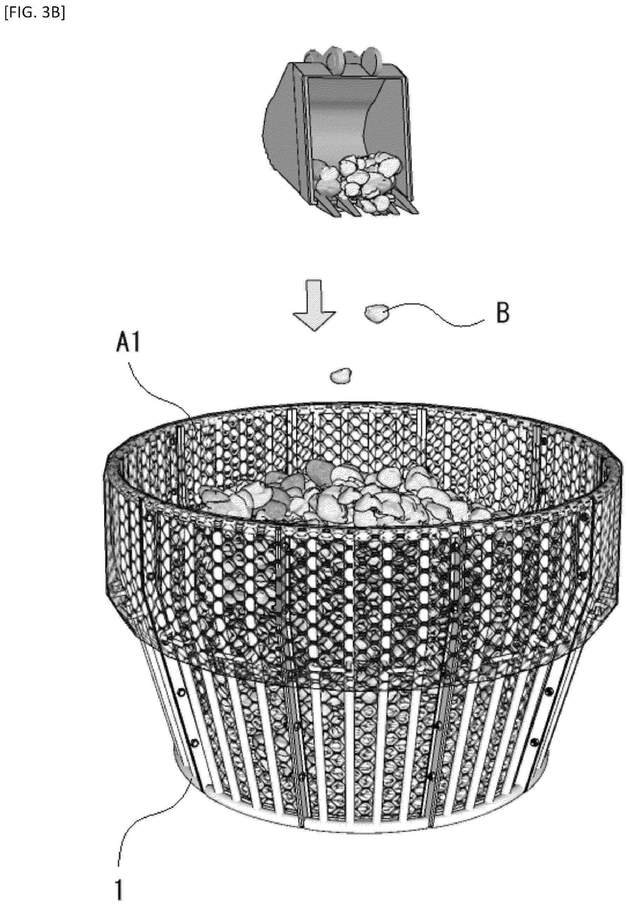

### PUTTING OF INFILLING MATERIAL (FIG. 3B)

The infilling material B is put into the bag body A1. More specifically, e.g., the following procedural steps are performed.

A heavy machine such as a backhoe is used to put a predetermined amount of infilling material B into the bag body A1 up to a height of the elevated portion H1.

As the bag body A1 has the infilling material B put thereinto, the infilling material B spreads along an inner surface of the frame body 10 thereby to press the bag body A1 against an inner surface of the frame body 10 along the inner surface.

In the course of this, a portion of the bag body A1 folded back onto the frame body 10 receives a dragging force toward an interior of the frame body 10. The mouth of the bag body A1 is, however, temporarily secured below the overhang handles 20 through the mouth-narrowing rope A3, and thereby, the folded-back portion of the bag body A1 is prevented from being drawn into the frame body 10.

Further, in an embodiment of the present invention, the overhang handles 20 are arranged on an outer surface of the enlarged portion H2. A dragging force toward an interior of the frame body 10, therefore, causes a net fabric of the bag body A1 to be pressed against elbow portions 13a and to be in intimate contact with an outer surface of the elevated portion H1. As a result, the friction increases between the net fabric and the outer surface of the elevated portion H1, thereby to reliably prevent draw-in of the net fabric caused by slippage of the mouth-narrowing rope A3.

### CLOSING OF BAG MOUTH

The mouth of the bag body A1 is closed. More specifically, e.g., the following procedural steps are performed.

After having put predetermined amount of infilling material B into the bag body A1, a worker loosens the temporarily tightened mouth-narrowing rope A3, and pulls the folded-back portion of the bag body A1 out of the frame body 10 so as to cover a top of the infilling material B with the pulled-out folded-back portion.

A worker ties the mouth of the bag body A1 with the mouth-narrowing rope A3 and closes the mouth. This completes the foot protection unit C.

A worker draws the lifting rope A2 from portions in proximity to the mouth of the bag body A1.

These operations are performed by the worker standing atop the frame device 1 (and infilling material B). Since the overhang handles 20 are arranged on an outer surface of the frame body 10, the worker can easily climb atop the frame device 1 through the use of these overhang handles 20 as steppers.

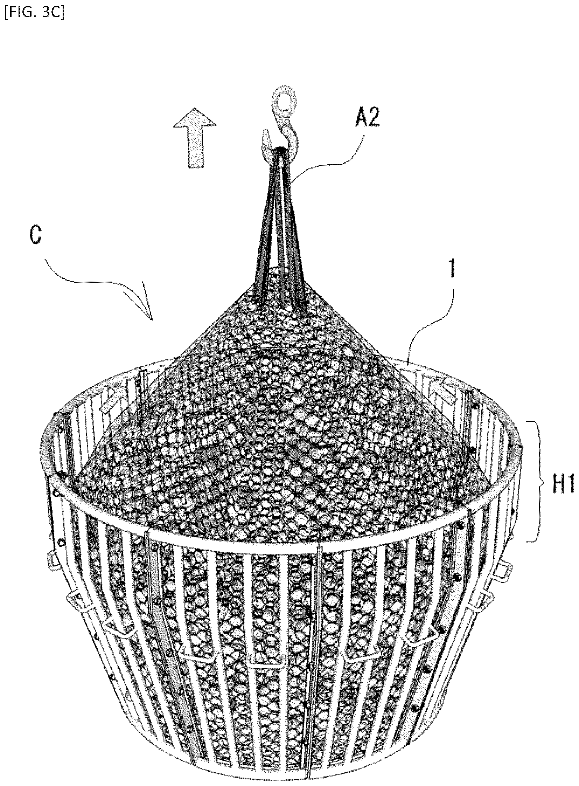

### LIFT-OFF (FIG. 3C)

The foot protection unit C is lifted off. More specifically, e.g., the following procedural steps are performed.

A worker draw a plurality of portions of the lifting rope A2 from positions in proximity to the mouth of the bag body A1, and slings the plurality of drawn portions on a hook of a crane or other equipment, so that the hook is lifted by the crane.

As the hook rises, the lifting rope A2 is pulled, and the mouth of bag body A1 is lifted upward. This causes a top of the bag body A1 to narrow inward thereby gathering the infilling material B in the elevated portion H1 toward a center of the foot protection unit C.

Then, sides of the bag body A1 are pulled upward, and the infilling material B in the bottom corner of the enlarged portion H2 is gathered toward a center of the foot protection unit C, thereby causing a bottom of the bag body A1 to expand downward in a hemispherical manner.

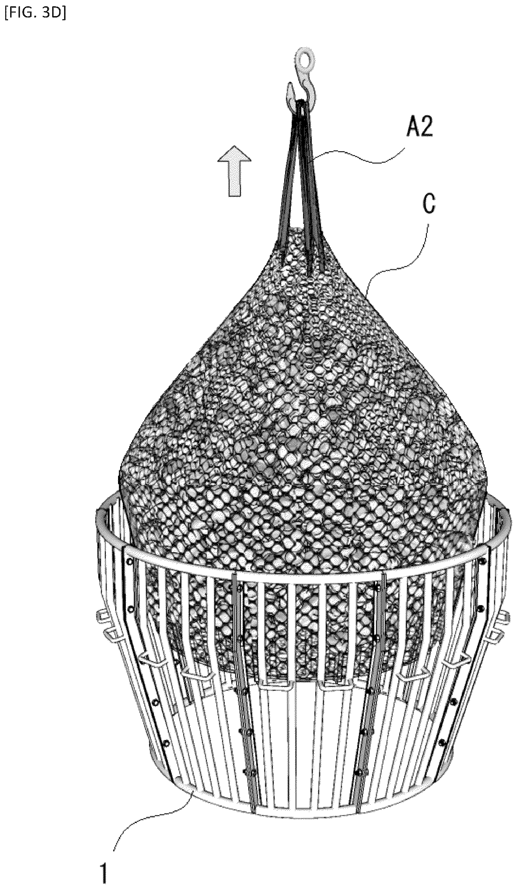

### REMOVAL (FIG. 3D)

The foot protection unit C is removed. More specifically, e.g., the following procedural steps are performed.

The foot protection unit C is lifted upward from inside the frame device 1.

During removal, if the foot protection unit C expands to such an extent that the foot protection unit C is larger than an inner diameter of the elevated portion H1, there is a probability that sides of the bag body A1 are pressed against an inner surface of the elevated portion H1 so as to create lateral pressure, and that the frame device 1 is lifted along with the foot protection unit C and fall down from the air.

In an embodiment of the present invention, an inner diameter of the elevated portion H1 is larger than a maximum diameter of the foot protection unit C. Even if the foot protection unit C expands to such an extent that its diameter is the maximum during being lifted, therefore, sides of the bag body A1 do not be in contact with an inner surface of the elevated portion H1. This prevents the frame device 1 from being lifted together, and enables smooth removal of the foot protection unit C from inside the frame device 1.

### (Reference Numerals)

- 1: Frame device
- 10: Frame body
- 10a: Separate frame
- 11: Upper frame member
- 12: Lower frame member
- 13: Longitudinally oriented frame member
- 13a: Elbow portion
- 14: Coupling portion
- 20: Overhang handle
- 30: Coupling means
- A: Civil-engineering work bag
- A1: Bag body
- A2: Lifting rope
- A3: Mouth-narrowing rope
- B: Infilling material
- C: Foot protection unit
- H1: Elevated portion
- H2: Enlarged portion

## Claims

1. A frame device for civil-engineering work bags to be used for putting infilling material into a civil-engineering work bag made of net fabric, the frame device comprising:
a frame body with an open top including an enlarged portion tapered so as to increase in diameter upward and an elevated portion elevated upward from an upper edge of the enlarged portion,
wherein an angle of an inner surface of the elevated portion with respect to an axial direction of the frame body is smaller than an angle of an inner surface of the enlarged portion with respect to an axial direction of the frame body.

2. The frame device for civil-engineering work bags according to claim 1, wherein
the elevated portion is elevated vertically from the upper edge of the enlarged portion.

3. The frame device for civil-engineering work bags according to claim 2, wherein
an inner diameter of the elevated portion is larger than a maximum diameter of the civil-engineering work bag in a lifted state having the infilling material put therein.

4. The frame device for civil-engineering work bags according to any one of claims 1 to 3, further comprising a plurality of overhang handles arranged in a protruding manner on an outer surface of the frame body.

5. The frame device for civil-engineering work bags according to claim 4, wherein
the plurality of overhang handles are arranged in a protruding manner on an outer surface of the enlarged portion.

6. The frame device for civil-engineering work bags according to any one of claims 1 to 3, wherein
the frame body is formed to have an annular upper frame member and an annular lower frame member coupled with a plurality of longitudinally oriented frame members.

7. The frame device for civil-engineering work bags according to any one of claims 1 to 3, wherein
the frame body has an assembly consisting of a plurality of frames arranged divisionally in a circumferential direction.
